# EUROPÄISCHE PATENTSCHRIFT

(11) **EP 1 697 820 B1**
(45) Veröffentlichungstag und Bekanntmachung des Hinweises auf die Patenterteilung: **02.06.2010**
(21) Anmeldenummer: 04820436.6
(22) Anmeldetag: 14.12.2004
(51) Int. Cl.: G06F 1/00

(54) **VERFAHREN ZUR FREISCHALTUNG EINES ZUGANGS ZU EINEM COMPUTERSYSTEM ODER ZU EINEM PROGRAMM**
METHOD FOR ACTIVATION OF AN ACCESS TO A COMPUTER SYSTEM OR TO A PROGRAMME
PROCEDE POUR ACTIVER UN ACCES A UN SYSTEME INFORMATIQUE OU A UN PROGRAMME

(30) Priorität: 18.12.2003 DE 10359680
(43) Veröffentlichungstag der Anmeldung: 06.09.2006
(73) Patentinhaber: Giesecke & Devrient GmbH, 81677 München (DE)
(72) Erfinder: MÜLLER, Robert, 85521 Riemerling (DE)
(74) Vertreter: Höhfeld, Jochen
(86) Internationale Anmeldenummer: PCT/EP2004/014237
(87) Internationale Veröffentlichungsnummer: WO 2005/059722

(56) Entgegenhaltungen:
- DE-A1- 10 211 036
- "Web Authentifizierung mit wibu-key" KEYNOTE, [Online] Nr. 2, Oktober 2001 (2001-10), Seiten 6-6, XP002317943 Gefunden im Internet: URL:http://wibu.de/files/news/kn2.pdf> [gefunden am 2005-02-14]
- "Web-Authentifizierung" WIBU-MAGAZIN, [Online] März 2003 (2003-03), Seite 4, XP002317944 Gefunden im Internet: URL:http://wibu.de/files/news/kn5.pdf> [gefunden am 2005-02-15]
- RANKL W ET AL: "Handbuch der Chipkarten, PASSAGE" HANDBUCH DER CHIPKARTEN. AUFBAU - FUNKTIONSWEISE - EINSATZ VON SMART CARDS, MUENCHEN : CARL HANSER VERLAG, DE, 1999, Seiten 450-459, XP002268702 ISBN: 3-446-21115-2
- DE LA PUENTE F ET AL INSTITUTE OF ELECTRICAL AND ELECTRONICS ENGINEERS: "Pocket device for authentication and data integrity on internet banking applications" PROCEEDINGS 37TH. ANNUAL 2003 INTERNATIONAL CARNAHAN CONFERENCE ON SECURITY TECHNOLOGY. (ICCST). TAIPEI, TAIWAN, OCT. 14 - 16, 2003, IEEE INTERNATIONAL CARNAHAN CONFERENCE ON SECURITY TECHNOLOGY, NEW YORK, NY : IEEE, US, Bd. CONF. 37, 14. Oktober 2003 (2003-10-14), Seiten 43-50, XP010706183 ISBN: 0-7803-7882-2

## Beschreibung

Die Erfindung betrifft ein Verfahren zur Freischaltung eines Zugangs zu einem Computersystem oder zu einem Programm. Weiterhin betrifft die Erfindung einen tragbarer Datenträger zur Freischaltung eines Zugangs zu einem Computersystem oder zu einem Programm.

Es sind eine Reihe von unterschiedlichen Vorgehensweisen und auch diverse Hilfsmittel bekannt, um für einen Benutzer einen Zugang zu einem Computersystem oder zu einem Programm freizuschalten. In vielen Fällen, bei denen keine allzu hohen Sicherheitsanforderungen bestehen, wird der Zugang nach einer korrekten Eingabe einer Benutzer-Kennung und eines Passworts freigeschaltet. Schwierigkeiten tauchen beispielsweise dann auf, wenn derselbe Benutzer über Zugangsberechtigungen zu vielen Computersystemen oder Programmen verfügt. Dann muss der Benutzer Kenntnis von einer Vielzahl von Benutzerkennungen und zugehörigen Passwörtern haben.

Statt einer manuellen Passworteingabe besteht auch die Möglichkeit, den Benutzer mit einem tragbaren Sicherheitsdatenträger auszustatten, mit dessen Hilfe eine Authentisierung durchgeführt wird. Dies setzt allerdings voraus, dass auf dem hierbei verwendeten Endgerät eine passende Software installiert ist, die einen Zugriff auf den tragbaren Sicherheitsdatenträger ermöglicht. Die Installation einer solchen Software ist insbesondere dann problematisch, wenn der Zugang zum Computersystem oder zum Programm für den Benutzer mittels eines Endgeräts eines Dritten herzustellen ist. Diese Situation kann beispielsweise bei einem Kundenbesuch eines Außendienstmitarbeiters auftreten, wenn dieser auf den Server seiner Firma zugreifen möchte. In einem derartigen Fall scheidet der Einsatz eines üblichen Sicherheitsdatenträgers in der Regel aus, da es meist nicht gestattet ist, die für den Einsatz des Sicherheitsdatenträgers erforderliche Software auf dem Endgerät des Kunden zu installieren. Zur Lösung dieses Problems ist es bereits bekannt, ein Gerät einzusetzen, das auf Knopfdruck eine Zahl auf einem Display anzeigt. Diese Zahl wird vom Außendienstmitarbeiter abgelesen und mittels des Endgeräts des Kunden beispielsweise als One-Time-Passwort in eine geschützte Internetseite eingetragen. Daraufhin erhält der Außendienstmitarbeiter über das Endgerät des Kunden für eine bestimme Zeit Zugriff auf den Server seiner Firma. Ein Nachteil dieser Vorgehensweise besteht allerdings darin, dass das One-Time-Passwort jeweils in das Endgerät eingetippt werden muss. Weiterhin ist es nachteilig, dass ein Zugang zum System von jedermann hergestellt werden kann, der im Besitz des Geräts zur Passwort-Erzeugung ist. Ein Verlust des Geräts kann daher äußerst kritisch sein.

Das Dokument "Web Authentifizierung mit WIBU-Key" WIBU-Magazin (online), Keynote Nr. 2, Oktober 2001, Seite 6 (gefunden im Internet unter URL:http://wibu.de/files/news/kn2.pdf am 14.02.2005) offenbart ein Verfahren, bei dem ein an einen Client-Rechner angeschlossener tragbarer Datenträger eine Seitenanfrage an einen Webserver-Rechner richtet, der diese durch Rücksenden von Authentifikationsanfragedaten beantwortet. Aus den Authentifikationsanfragedaten erzeugt der Client-Rechner Authentifikationsdaten, die an den Server-Rechner geschickt werden und von diesem verifiziert werden, so dass sich der Datenträger gegenüber dem Webserver-Rechner authentisiert. Ergänzend offenbart das Dokument "Web-Authentifizierung" WIBU-Magazin (online), Keynote Nr. 5, März 2003, Seite 4 (gefunden im Internet unter URL:http://WIBU.de/files/news/kn5.pdf am 15.02.2005) ein Verfahren, bei dem sicherheitsrelevante Daten von einem tragbaren Datenträger verschlüsselt werden und von diesem über einen Client-Rechner an einen Webserver-Rechner zur Verifikation gesendet werden, so dass sich auch hier der Datenträger gegenüber dem Webserver-Rechner authentisiert.

Im "Handbuch der Chipkarten" von Rankl et al., 3. Auflage, München, Karl-Hanser-Verlag, 1999, Seiten 450-459, werden Sicherheitstechniken zum Schutz und zur Geheimhaltung von in Chipkarten gespeicherten Daten beschrieben. Hierbei prüft die Chipkarte die Identität eines Benutzers, beispielsweise durch Vergleichen von Vergleichsdaten des Benutzer mit auf der Chipkarte vorhandenen Referenzdaten.

Der Erfindung liegt die Aufgabe zugrunde, über ein Endgerät auf eine sichere und für den Benutzer komfortable Weise eine Freischaltung eines Zugangs zu einem Computersystem oder zu einem Programm zu ermöglichen, ohne eine eigens für diesen Zweck vorgesehene Software auf dem Endgerät zu installieren.

Diese Aufgabe wird durch ein Verfahren mit der Merkmalskombination des Anspruchs 1 gelöst.

Beim erfindungsgemäßen Verfahren zur Freischaltung eines Zugangs zu einem Computersystem oder zu einem Programm für einen Benutzer über ein Endgerät ohne eine eigens für diesen Zweck auf dem Endgerät installierte Software wird eine Datenverbindung zwischen dem tragbaren Datenträger des Benutzers und einem Endgerät hergestellt. Vom tragbaren Datenträger wird eine Authentisierung des Benutzers durchgeführt. Bei erfolgreicher Authentisierung wird vom tragbaren Datenträger ein Zugangscode zur Freischaltung des Zugangs zu dem Computersystem oder dem Programm für eine Übertragung über die Datenverbindung bereitgestellt.

Die Erfindung hat den Vorteil, dass durch den Einsatz des tragbaren Datenträgers der Zugang auf sehr komfortable Weise freigeschaltet werden kann. Die dabei vorgesehene Benutzerauthentisierung gewährleistet einen hohen Sicherheitsstandard. Besonders vorteilhaft ist zudem, dass für die Nutzung des tragbaren Datenträgers keine spezielle Software auf dem Endgerät installiert werden muss. Dadurch ist es für den Benutzer möglich, den Zugang mit Hilfe des Endgeräts eines Dritten freizuschalten, auf dem der Benutzer keine Software installieren darf.

Die Datenverbindung kann insbesondere über eine USB-Schnittstelle des Endgeräts hergestellt werden. Da zunehmend mehr Endgeräte über eine USB-Schnittstelle verfügen, ist das erfindungsgemäße Verfahren dadurch sehr universell einsetzbar. Außerdem ist es von Vorteil, dass der tragbare Datenträger über die USB-Schnittstelle mit seiner Betriebsspannung versorgt werden kann und der tragbare Datenträger daher keine eigene Spannungsquelle benötigt.

Die Authentisierung kann auf Basis einer vom Benutzer eingegebenen persönlichen Geheiminformation durchgeführt werden. Dies hat den Vorteil, dass eine Realisierung mit einfachen Mitteln möglich ist und keine hohe Rechenkapazität vorgehalten werden muss. Ebenso ist es auch möglich, die Authentisierung auf Basis eines biometrischen Verfahrens, insbesondere der Prüfung eines Fingerabdrucks des Benutzers durchzuführen. Dadurch lässt sich ein besonders hoher Sicherheitsstandard gewährleisten.

Bei einer Variante des erfindungsgemäßen Verfahrens wird der Zugangscode vom tragbaren Datenträger erzeugt. Um potentielle Angriffe zu erschweren, kann bei der Erzeugung des Zugangscodes eine Zufallszahl berücksichtigt werden, die vom Computersystem bereitgestellt wird. Dadurch kommt jedes Mal ein anderer Zugangscode zur Anwendung, so dass ein Ausspähen des Zugangscodes keine für einen Angreifer verwertbare Informationen liefert. Bei einer weiteren Variante des erfindungsgemäßen Verfahrens wird wenigstens ein Zugangscode vor unberechtigten Zugriffen geschützt im tragbaren Datenträger gespeichert. Dadurch entfällt der Rechenaufwand für die Erzeugung des Zugangscodes.

Der Zugangscode kann für die Übertragung über die Datenverbindung in einem öffentlichen Bereich eines Speichers des tragbaren Datenträgers bereitgestellt werden. Dadurch besteht die Möglichkeit, den Zugangscode durch Anwendung von Befehlen des Endgeräts über die Datenverbindung zu übertragen. In einer Weiterbildung des erfindungsgemäßen Verfahrens wird vom tragbaren Datenträger ein Eingabegerät des Endgeräts simuliert. Dadurch wird die Möglichkeit geschaffen, den Zugangscode vom tragbaren Datenträger als eine Eingabe des simulierten Eingabegeräts über die Datenverbindung zu übertragen. Dies hat den Vorteil, dass für die Übertragung des Zugangscodes keine manuelle Befehlseingabe erforderlich ist. Bei allen Varianten des erfindungsgemäßen Verfahrens kann der Zugangscode beispielsweise an eine Internetseite übertragen werden.

Bei einer vorteilhaften Ausgestaltung des erfindungsgemäßen Verfahrens wird im Speicher des tragbaren Datenträgers eine Software zur Herstellung einer Verbindung zum Computersystem gespeichert. Dadurch wird eine weitgehende Unabhängigkeit vom verwendeten Eingabegerät erreicht. Um den externen Zugriff auf den Speicher des tragbaren Datenträgers möglichst einfach zu gestalten, kann der Speicher als ein Laufwerk betrieben werden.

Der erfindungsgemäße tragbare Datenträger zur Freischaltung eines Zugangs zu einem Computersystem oder zu einem Programm für einen Benutzer über ein Endgerät ohne eine eigens für diesen Zweck auf dem Endgerät installierte Software weist einen Sicherheitschip zur Bereitstellung eines Zugangscodes für die Freischaltung des Zugangs zum Computersystem oder Programm auf. Die Besonderheit des erfindungsgemäßen tragbaren Datenträgers besteht darin, dass eine Einrichtung zur Ausbildung einer Datenverbindung mit dem Endgerät vorgesehen ist und mit dem Sicherheitschip eine Authentisierung des Benutzers durchführbar ist.

Der erfindungsgemäße tragbare Datenträger ist insbesondere so ausgebildet, dass er an eine USB-Schnittstelle des Endgeräts anschließbar ist. In einer Weiterbildung weist der tragbare Datenträger einen USB-Hub auf, durch den die Datenverbindung mit dem Endgerät innerhalb des tragbaren Datenträgers in mehrere separate Signalpfade aufgetrennt wird. Dadurch besteht die Möglichkeit, seitens des tragbaren Datenträgers mehrere USB-Geräte, beispielsweise ein Eingabegerät und einen Wechseldatenträger, beim Endgerät anzumelden. Weiterhin kann der erfindungsgemäße tragbare Datenträger einen als ein Flash-EEPROM ausgebildeten Speicher aufweisen. Ein derartiger Speicher kann mit geringem Aufwand von außerhalb des tragbaren Datenträgers ausgelesen werden. In einem bevorzugten Ausführungsbeispiel weist der erfindungsgemäße tragbare Datenträger einen Sensor zur Erfassung biometrischer Daten, insbesondere einen Fingerabdrucksensor auf.

Die Erfindung wird nachstehend anhand der in der Zeichnung dargestellten Ausführungsbeispiele erläutert.

Es zeigen:
- Fig. 1: eine schematische Darstellung der Architektur eines Ausführungsbeispiels für einen erfindungsgemäß ausgebildeten tragbaren Datenträger, der zur Freischaltung eines Zugangs zu einem Computersystem oder zu einem Programm an einem Personalcomputer angeschlossen ist,
- Fig. 2: ein Ausführungsbeispiel für die erfindungsgemäße Vorgehensweise zur Freischaltung des Zugangs mit Hilfe des tragbaren Datenträgers und
- Fig. 3: eine schematische Darstellung der Architektur eines weiteren Ausführungsbeispiels des erfindungsgemäßen tragbaren Datenträgers.

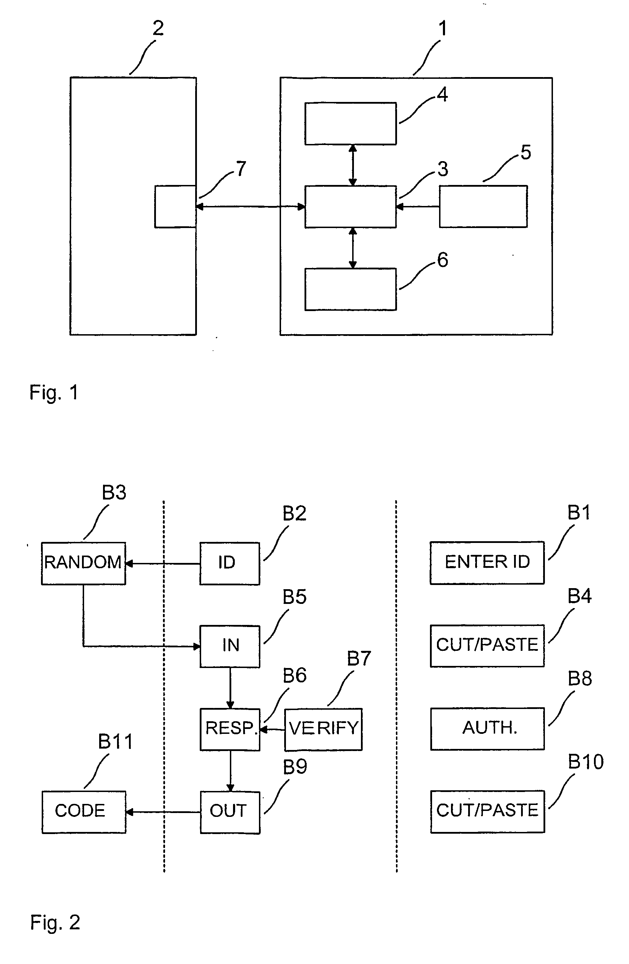

Fig. 1 zeigt eine schematische Darstellung der Architektur eines Ausführungsbeispiels für einen erfindungsgemäß ausgebildeten tragbaren Datenträger 1, der zur Freischaltung eines Zugangs zu einem Computersystem oder zu einem Programm an einem Personalcomputer 2 angeschlossen ist. Der tragbare Datenträger 1 ist vorzugsweise als ein kleines Gerät ausgebildet, das auch als Token bezeichnet wird und vorzugsweise in einen Anschluss des Personalcomputers 2 eingesteckt wird. Der tragbare Datenträger 1 weist einen integrierten Schaltkreis 3 auf, der mit einem nichtflüchtigen Speicher 4, einem Fingerabdrucksensor 5 und einem Sicherheitschip 6 verbunden ist. Extern ist der integrierte Schaltkreis 3 mit einer USB-Schnittstelle 7 des Personalcomputers 2 verbunden. USB stellt dabei die übliche Abkürzung für Universal Serial Bus dar. Der Personalcomputer 2 ist auf eine nicht figürlich dargestellte Weise mit einem Netzwerk, beispielsweise dem Internet, verbunden. Als integrierter Schaltkreis 3 wird vorzugsweise ein Application Specific Integrated Circuit, kurz ASIC, eingesetzt, der in seiner Funktionsweise speziell auf den tragbaren Datenträger 1 zugeschnitten ist. Der nichtflüchtige Speicher 4 ist insbesondere als Flash-EEPROM ausgebildet. Der Sicherheitschip 6 kommuniziert mit dem integrierten Schaltkreis 3 gemäß dem standardisierten T=1 Protokoll und kann je nach Ausbildung des tragbaren Datenträgers 1 auch Bestandteil einer Chipkarte sein, die in den tragbaren Datenträger 1 eingesteckt ist. Die Verbindung des tragbaren Datenträgers 1 mit der USB-Schnittstelle 7 des Personalcomputers 2 dient zum einen der Versorgung des tragbaren Datenträgers 1 mit einer Betriebsspannung und zum anderen der Datenübertragung zwischen dem tragbaren Datenträger 1 und dem Personalcomputer 2. Die Funktionsweise des tragbaren Datenträgers 1 wird im Einzelnen anhand von Fig. 2 erläutert.

Fig. 2 zeigt ein Ausführungsbeispiel für die erfindungsgemäße Vorgehensweise zur Freischaltung des Zugangs mit Hilfe des tragbaren Datenträgers 1. Dabei ist jeweils eine Aktion bzw. sind mehrere Aktionen durch je einen Block dargestellt. Abhängig davon ob die jeweilige Aktion einer geschützten Internetseite, über die der Zugang erfolgen soll, dem tragbaren Datenträger 1 oder dem Benutzer zuzurechnen ist, ist der zugehörige Block in eine von drei Spalten eingezeichnet. Dabei sind in der linken Spalte die Aktionen abgebildet, die sich auf der Internetseite abspielen. In der mittleren Spalte sind die Aktionen des tragbaren Datenträgers 1 dargestellt. In der rechten Spalte sind die korrespondierenden Aktionen des Benutzers veranschaulicht.

Um das erfindungsgemäße Verfahren zu starten, wird mit dem Personalcomputer 2 die für die Freischaltung des Zugangs benötigte Internetseite aufgerufen und der tragbare Datenträger 1 in einen Anschluss der USB-Schnittstelle 7 des Personalcomputers 2 eingesteckt und dadurch aktiviert. Wie durch einen Block B1 dargestellt, gibt der Benutzer danach eine Benutzerkennung auf der aufgerufenen Internetseite ein. Die Eingabe kann beispielsweise dadurch erfolgen, dass der Benutzer die Benutzerkennung aus einem öffentlichen Bereich des nichtflüchtigen Speichers 4 des tragbaren Datenträgers 1 in die Internetseite überträgt. Dies ist als ein Block B2 dargestellt. Der öffentliche Bereich des nichtflüchtigen Speichers 4 ist von außerhalb des tragbaren Datenträgers 1 zugänglich. Für die Übertragung können daher auf einem üblichen Personalcomputer 2 verfügbare Befehle wie "kopieren" bzw. "ausschneiden" und "einfügen" verwendet werden. Alternativ zur Übertragung aus dem nichtflüchtigen Speicher 4 des tragbaren Datenträgers 1 ist es auch möglich, die Benutzerkennung über eine Tastatur des Personalcomputers 2 in die Internetseite einzutragen. In einer weiteren Abwandlung wird ganz auf die Eingabe der Benutzerkennung verzichtet.

Als nächste Aktion wird auf der Internetseite eine von einem zugehörigen Server generierte Zufallszahl angezeigt. Dies wird durch einen Block B3 veranschaulicht. Gemäß einem Block B4 wird die Zufallszahl vom Benutzer mittels der Befehle "Ausschneiden" und "Einfügen" von der Internetseite in den öffentlichen Bereich des nichtflüchtigen Speichers 4 des tragbaren Datenträgers 1 übertragen. Prinzipiell ist es auch möglich, statt des Befehls "ausschneiden" den Befehl "kopieren" zu verwenden. Durch einen Block B5 wird veranschaulicht, dass die Zufallszahl als eine Eingabe für eine als ein Block B6 dargestellte Erzeugung einer Antwort des tragbaren Datenträgers 1 herangezogen wird. Wie durch einen Block B7 angedeutet ist, wird die Antwort allerdings nur im Falle einer erfolgreichen Authentisierung des Benutzers erzeugt. Die Authentisierung erfolgt beim vorliegenden Ausführungsbeispiel des erfindungsgemäßen Verfahrens mittel einer Verifizierung eines Fingerabdrucks des Benutzers. Die Verifizierung löst der Benutzer gemäß Block B8 beispielsweise durch Auflegen eines Fingers auf den Fingerabdrucksensor 5 oder durch Ausführen eines Programms im nichtflüchtigen Speicher 4 des tragbaren Datenträgers 1 aus. Der Fingerabdrucksensor 5 nimmt ein Bild auf, dessen Merkmale extrahiert und mit gespeicherten Referenzmerkmalen verglichen werden. Alternativ kann die Authentisierung des Benutzers auch durch Eingabe einer persönlichen Geheimzahl erfolgen. Nach erfolgreicher Authentisierung erzeugt der tragbare Datenträger 1 die Antwort. Bei der Erzeugung der Antwort wird die Zufallszahl berücksichtigt. Beispielsweise wird zur Erzeugung der Antwort eine digitale Signatur der gehashten Zufallszahl berechnet.

Wie durch einen Block B9 dargestellt, wird die Antwort im öffentlichen Bereich des nichtflüchtigen Speichers 4 des tragbaren Datenträgers 1 bereitgestellt. Gemäß Block B10 überträgt der Benutzer durch Anwendung der Befehle "ausschneiden" und "einfügen" die Antwort vom nichtflüchtigen Speicher 4 des tragbaren Datenträgers 1 auf die Internetseite. Durch einen Block 11 ist angedeutet, dass der zugehörige Server die Korrektheit der Antwort verifiziert und entsprechend den Zugang für den Benutzer freigibt.

Falls keine allzu hohen Sicherheitsanforderungen zu erfüllen sind, kann auch eine vereinfachte Abwandlung des erfindungsgemäßen Verfahrens ohne Zufallszahl zum Einsatz kommen. Bei dieser Abwandlung wird wiederum der Fingerabdruck des Benutzers verifiziert. Bei einem positiven Ergebnis wird vom tragbaren Datenträger 1 ein One-Time-Passwort erzeugt und im öffentlichen Bereich des nichtflüchtigen Speichers 4 des tragbaren Datenträgers 1 abgelegt. Der Benutzer überträgt das One-Time-Passwort auf die bereits beschriebene Weise auf die Internetseite. Daraufhin wird der Zugang für den Benutzer für einen vorgegebenen Zeitraum freigeschaltet. Auch bei der Abwandlung kann eine weitere Vereinfachung des erfindungsgemäßen Verfahrens dadurch erreicht werden, dass statt des Fingerabdrucks eine persönliche Geheimzahl zur Authentisierung des Benutzers verwendet wird. In diesem Fall ist ein ausführbares Programm im öffentlichen Bereich des nichtflüchtigen Speichers 4 des tragbaren Datenträgers 1 abgelegt, das die Eingabe der persönlichen Geheimzahl des Benutzers verlangt. Der vom Benutzer eingegebene Wert für die Geheimzahl wird mit einem Referenzwert verglichen und bei einer Übereinstimmung wird wiederum ein One-Time-Passwort erzeugt, das im öffentlichen Bereich des nichtflüchtigen Speichers 4 des tragbaren Datenträgers 1 abgelegt und von dort vom Benutzer an die Internetseite übertragen wird.

Bei der Durchführung des erfindungsgemäßen Verfahrens kann auch jeweils ein Browser zum Einsatz kommen, der als ausführbares Programm im tragbaren Datenträger 1 implementiert ist. Dabei sind die Internetseiten, über die vom Benutzer ein Zugang freigeschaltet werden kann, als "Favoriten" hinterlegt. Bei dieser Abwandlung ist es nicht erforderlich, auf den Browser des Personalcomputers 2 zurückzugreifen und dessen Sicherheitseinstellungen zu verwenden.

Bei allen Verfahrensvarianten werden sicherheitsrelevante Operationen jeweils vom Sicherheitschip 6 ausgeführt und geheim zu haltende Informationen im Sicherheitschip 6 gespeichert. Insbesondere kann vorgesehen sein, im Sicherheitschip 6 einen biometrischen Referenzdatensatz zu speichern, welcher im integrierten Schaltkreis 3 mit aktuellen biometrischen Rohdaten ganz oder teilweise verglichen werden kann.

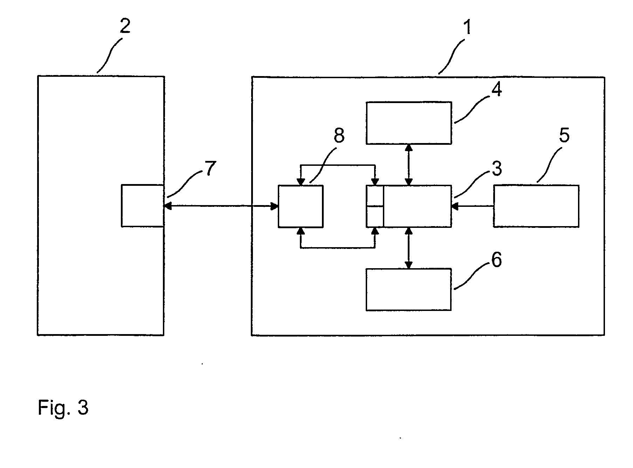

Fig. 3 zeigt eine schematische Darstellung der Architektur eines weiteren Ausführungsbeispiels des erfindungsgemäßen tragbaren Datenträgers 1. Dieses Ausführungsbeispiel zeichnet sich dadurch aus, dass der tragbare Datenträger 1 über einen integrierten USB-Hub 8 an die USB-Schnittstelle 7 des Personalcomputers 2 angeschlossen ist. Der USB-Hub 8 ermöglicht den Anschluss zweier USB-Geräte an die USB-Schnittstelle 7 des Personalcomputers 2. Innerhalb des tragbaren Datenträgers 1 sind zwei getrennte Signalpfade zwischen dem USB-Hub 8 und dem integrierten Schaltkreise 3 ausgebildet. Der integrierte Schaltkreis 3 simuliert für den ersten Signalpfad eine USB-Tastatur und meldet sich entsprechend beim Betriebssystem des Personalcomputers 2 als zusätzliche Tastatur an. Die USB-Tastatur wird vom Personalcomputer 2 wie eine physisch vorhandene Tastatur behandelt und deren Eingaben werden entsprechend verarbeitet. Für den zweiten Signalpfad wird ein Flashlaufwerk implementiert. Das Flash-Laufwerk weist ein ausführbares Programm auf, das eine Auswahl unter verschiedenen Internetseiten und Diensten erlaubt. Ansonsten entspricht das Ausführungsbeispiel gemäß Fig. 3 dem in Fig. 1 dargestellten Ausführungsbeispiel.

Beim Einsatz des gemäß Fig. 3 ausgeführten tragbaren Datenträgers 1 wird dieser in einen Anschluss der USB-Schnittstelle 7 des Personalcomputers 2 eingesteckt. Mit Hilfe des ausführbaren Programms auf dem Flash-Laufwerk wird eine gewünschte Internetseite ausgewählt. Dann setzt der Benutzer die Eingabemarke auf der Internetseite in ein dafür vorgesehenes Eingabefeld und löst die biometrische Benutzerauthentisierung durch Auflegen eines Fingers auf den Fingerabdrucksensor 5 des tragbaren Datenträgers 1 aus. Nach erfolgreicher Authentisierung des Benutzers erzeugt der tragbare Datenträger 1 ein One-Time-Passwort und sendet dieses über den ersten Signalpfad an das Eingabefeld der Internetseite. Eine manuelle Übertragung des One-Time-Passworts an die Internetseite ist nicht erforderlich, da für den ersten Signalpfad die Tastatur simuliert wird und dadurch eine automatische Übertragung erfolgt. Ebenso ist es auch möglich, eine Benutzerkennung und ein Passwort, die im tragbaren Datenträger 1 gespeichert sind, an entsprechende Eingabefelder der Internetseite zu senden. Auf die vorstehend beschriebene Weise kann der Benutzer auf eine Vielzahl von verschiedenen Internetseiten zugreifen, ohne dass er sich die jeweils dazugehörigen Benutzerkennungen und Passwörter merken muss, da diese nach erfolgreicher Authentisierung des Benutzers automatisch in die Eingabefelder der besuchten Internetseite eingegeben werden. Anstatt in eine Internetseite können die Benutzerkennung und das Passwort jeweils auch in eine lokale Anwendung oder eine Netzwerkanwendung mit Passwortschutz eingegeben werden. Insbesondere ist auch eine Eingabe in den Anmeldebildschirm eines Betriebssystems möglich. Ferner ist auch denkbar, in den nichtflüchtigen Speicher 4 ein ausführbares Programm zum Registrieren von Anwendungen, Internetseiten oder Diensten aufzunehmen. Hierbei kann das Programm die jeweils zuletzt über das Standardeingabegerät eingegebenen Befehle des Benutzers aufzeichnen.

Falls das Programm eine durch Passwort geschützte Anwendung oder Internetseite erstmalig neu erkennt, kann es dem Benutzer die automatische Registrierung der Login-Informationen vorschlagen. Je nach Konfigurationseinstellungen des Programms kann beim nächsten Aufruf der Eintrag der Login-Informationen automatisch erfolgen, falls der Benutzer gegenüber dem Token authentisiert ist. Alternativ kann das Programm zum Auflegen des Fingers auffordern.

Im Übrigen sind das anhand von Fig. 2 beschriebene erfindungsgemäße Verfahren und dessen Varianten in analoger Weise auch bei dem in Fig. 3 dargestellten Ausführungsbeispiel des tragbaren Datenträgers 1 anwendbar. Allerdings ist dann für die Übertragung der Daten vom tragbaren Datenträger 1 zum Personalcomputer 2 keine manuelle Befehlseingabe erforderlich.

Ein wichtiger Aspekt besteht bei allen Varianten des erfindungsgemäßen Verfahrens darin, dass es nicht erforderlich ist, eigens für das Verfahren eine Software auf dem Personalcomputer 2 zu installieren. Für die Durchführung des Verfahrens kann auf Standardsoftware des Personalcomputers 2 und/ oder auf Software zurückgegriffen werden, die auf dem tragbaren Datenträger 1 implementiert ist.

## Patentansprüche

1. Verfahren zur Freischaltung eines Zugangs zu einem Computersystem oder zu einem Programm für einen Benutzer über ein Endgerät (2) ohne eine eigens für diesen Zweck auf dem Endgerät (2) installierte Software, wobei
- eine Datenverbindung zwischen dem tragbaren Datenträger (1) des Benutzers und einem Endgerät (2) hergestellt wird,
- vom tragbaren Datenträger (1) eine Authentisierung des Benutzers durchgeführt wird,
- bei erfolgreicher Authentisierung vom tragbaren Datenträger (1) ein Zugangscode zur Freischaltung des Zugangs zu dem Computersystem oder dem Programm für eine Übertragung über die Datenverbindung bereitgestellt wird,
**dadurch gekennzeichnet, daß** vom tragbaren Datenträger (1) ein Eingabegerät des Endgeräts (2) simuliert wird und der Zugangscode vom tragbaren Datenträger (1) als eine Eingabe des simulierten Eingabegeräts über die Datenverbindung übertragen wird.

2. Verfahren nach Anspruch 1, **dadurch gekennzeichnet, dass** die Datenverbindung über eine USB-Schnittstelle (7) des Endgeräts (2) hergestellt wird.

3. Verfahren nach einem der vorhergehenden Ansprüche, **dadurch gekennzeichnet, dass** die Authentisierung auf Basis einer vom Benutzer eingegebenen persönlichen Geheiminformation durchgeführt wird.

4. Verfahren nach einem der Ansprüche 1 oder 2, **dadurch gekennzeichnet, dass** die Authentisierung auf Basis eines biometrischen Verfahrens, insbesondere der Prüfung eines Fingerabdrucks des Benutzers durchgeführt wird.

5. Verfahren nach einem der vorhergehenden Ansprüche, **dadurch gekennzeichnet, dass** der Zugangscode vom tragbaren Datenträger (1) erzeugt wird.

6. Verfahren nach Anspruch 5, **dadurch gekennzeichnet, dass** bei der Erzeugung des Zugangscodes eine Zufallszahl berücksichtigt wird, die vom Computersystem bereitgestellt wird.

7. Verfahren nach einem der Ansprüche 1 bis 4, **dadurch gekennzeichnet dass** wenigstens ein Zugangscode vor unberechtigten Zugriffen geschützt im tragbaren Datenträger (1) gespeichert wird.

8. Verfahren nach einem der vorhergehenden Ansprüche, **dadurch gekennzeichnet, dass** der Zugangscode für die Übertragung über die Datenverbindung in einem öffentlichen Bereich eines Speichers (4) des tragbaren Datenträgers (1) bereitgestellt wird.

9. Verfahren nach einem der vorhergehenden Ansprüche, **dadurch gekennzeichnet, dass** der Zugangscode an eine Internetseite übertragen wird.

10. Verfahren nach einem der vorhergehenden Ansprüche, **dadurch gekennzeichnet, dass** im Speicher (4) des tragbaren Datenträgers (1) eine Software zur Herstellung einer Verbindung zum Computersystem gespeichert wird.

11. Verfahren nach einem der vorhergehenden Ansprüche, **dadurch gekennzeichnet, dass** der Speicher (4) des tragbaren Datenträgers (1) als ein Laufwerk betrieben wird.

12. Tragbarer Datenträger zur Freischaltung eines Zugangs zu einem Computersystem oder zu einem Programm für einen Benutzer über ein Endgerät (2) ohne eine eigens für diesen Zweck auf dem Endgerät (2) installierte Software, mit einem Sicherheitschip (6) zur Bereitstellung eines Zugangscodes für die Freischaltung des Zugangs zum Computersystem oder Programm, wobei eine Einrichtung (3) zur Ausbildung einer Datenverbindung mit dem Endgerät (2) vorgesehen ist und mit dem Sicherheitschip (6) eine Authentisierung des Benutzers durchführbar ist, **dadurch gekennzeichnet, daß** vom tragbaren Datenträger (1) ein Eingabegerät des Endgeräts (2) simuliert wird und der Zugangscode vom tragbaren Datenträger (1) als eine Eingabe des simulierten Eingabegeräts über die Datenverbindung übertragen wird.

13. Tragbarer Datenträger nach Anspruch 12, **dadurch gekennzeichnet, dass** er an eine USB-Schnittstelle (7) des Endgeräts (2) anschließbar ist.

14. Tragbarer Datenträger nach einem der Ansprüche 12 oder 13, **dadurch gekennzeichnet, dass** er einen USB-Hub (8) aufweist, durch den die Datenverbindung mit dem Endgerät (2) innerhalb des tragbaren Datenträgers (1) in mehrere separate Signalpfade aufgetrennt wird.

15. Tragbarer Datenträger nach einem der Ansprüche 12 bis 14, **dadurch gekennzeichnet, dass** er einen als ein Flash-EEPROM ausgebildeten Speicher (4) aufweist.

16. Tragbarer Datenträger nach einem der Ansprüche 12 bis 15, **dadurch gekennzeichnet, dass** er einen Sensor (5) zur Erfassung biometrischer Daten, insbesondere einen Fingerabdrucksensor aufweist.

## Claims

1. A method for enabling access to a computer system or to a program for a user via a terminal (2) without any software installed on the terminal (2) specially for this purpose, wherein:
- a data connection is established between the portable data carrier (1) of the user and a terminal (2),
- the portable data carrier (1) carries out an authentication of the user,
- upon successful authentication, the portable data carrier (1) makes available an access code for enabling access to the computer system or to the program for a transmission via the data connection,
**characterized in that** the portable data carrier (1) simulates an input device of the terminal (2) and the access code is transmitted from the portable data carrier (1) via the data connection as an input of the simulated input device.

2. The method according to claim 1, **characterized in that** the data connection is established via a USB interface (7) of the terminal (2).

3. The method according to either of the preceding claims, **characterized in that** the authentication is carried out on the basis of personal secret information entered by the user.

4. The method according to either of claims 1 and 2, **characterized in that** the authentication is carried out on the basis of a biometric method, in particular the checking of a fingerprint of the user.

5. The method according to any of the preceding claims, **characterized in that** the access code is generated by the portable data carrier (1).

6. The method according to claim 5, **characterized in that** upon generation of the access code there is taken into account a random number made available by the computer system.

7. The method according to any of claims 1 to 4, **characterized in that** at least one access code is stored in the portable data carrier (1) so as to be protected from unauthorized accesses.

8. The method according to any of the preceding claims, **characterized in that** the access code for transmission via the data connection is made available in a public area of a memory (4) of the portable data carrier (1).

9. The method according to any of the preceding claims, **characterized in that** the access code is transmitted to an Internet page.

10. The method according to any of the preceding claims, **characterized in that** software for establishing a connection to the computer system is stored in the memory (4) of the portable data carrier (1).

11. The method according to any of the preceding claims, **characterized in that** the memory (4) of the portable data carrier (1) is operated as a disk drive.

12. A portable data carrier for enabling access to a computer system or to a program for a user via a terminal (2) without any software installed on the terminal (2) specially for this purpose, having a security chip (6) for making available an access code for enabling the access to the computer system or program, wherein a device (3) for forming a data connection to the terminal (2) is provided and an authentication of the user can be carried out with the security chip (6), **characterized in that** the portable data carrier (1) simulates an input device of the terminal (2) and the access code is transmitted from the portable data carrier (1) via the data connection as an input of the simulated input device.

13. The portable data carrier according to claim 12, **characterized in that** it is connectable to a USB interface (7) of the terminal (2).

14. The portable data carrier according to either of claims 12 and 13, **characterized in that** it has a USB hub (8) through which the data connection to the terminal (2) is divided up into a plurality of separate signal paths within the portable data carrier (1).

15. The portable data carrier according to any of claims 12 to 14, **characterized in that** it has a memory (4) configured as a flash EEPROM.

16. The portable data carrier according to any of claims 12 to 15, **characterized in that** it has a sensor (5) for detecting biometric data, in particular a fingerprint sensor.

## Revendications

1. Procédé d'activation d'un accès à un système informatique ou à un programme pour un utilisateur par l'intermédiaire d'un terminal (2) sans un logiciel installé spécialement dans ce but sur le terminal (2),
- une connexion de données entre le support de données portable (1) de l'utilisateur et un terminal (2) étant établie,
- une authentification de l'utilisateur étant effectuée par le support de données portable (1),
- un code d'accès destiné à l'activation de l'accès au système informatique ou au programme pour une transmission par l'intermédiaire de la connexion de données étant mis à disposition par le support de données portable (1) dans le cas où l'authentification a abouti,
**caractérisé en ce qu'**une unité d'entrée du terminal (2) est simulée par le support de données portable (1) et **en ce que** le code d'accès est transmis par le support de données portable (1) par l'intermédiaire de la connexion de données en tant qu'une entrée de l'unité d'entrée simulée.

2. Procédé selon la revendication 1, **caractérisé en ce que** la connexion de données est établie par l'intermédiaire d'une interface USB (7) du terminal (2).

3. Procédé selon une des revendications précédentes, **caractérisé en ce que** l'authentification est effectuée sur la base d'une information secrète personnelle entrée par l'utilisateur.

4. Procédé selon une des revendications 1 ou 2, **caractérisé en ce que** l'authentification est effectuée sur la base d'un procédé biométrique, notamment de la vérification d'une empreinte digitale de l'utilisateur.

5. Procédé selon une des revendications précédentes, **caractérisé en ce que** le code d'accès est généré par le support de données portable (1).

6. Procédé selon la revendication 5, **caractérisé en ce que**, lors de la génération du code d'accès, un nombre aléatoire mis à disposition par le système informatique est pris en compte.

7. Procédé selon une des revendications de 1 à 4, **caractérisé en ce qu'**au moins un code d'accès est sauvegardé dans le support de données portable (1) de manière protégée contre des accès non autorisés.

8. Procédé selon une des revendications précédentes, **caractérisé en ce que** le code d'accès pour la transmission par l'intermédiaire de la connexion de données est mis à disposition dans une zone publique d'une mémoire (4) du support de données portable (1).

9. Procédé selon une des revendications précédentes, **caractérisé en ce que** le code d'accès est transmis à une page Internet.

10. Procédé selon une des revendications précédentes, **caractérisé en ce qu'**un logiciel pour l'établissement d'une connexion avec le système informatique est stocké dans la mémoire (4) du support de données portable (1).

11. Procédé selon une des revendications précédentes, **caractérisé en ce que** la mémoire (4) du support de données portable (1) est exploitée en tant qu'un lecteur de disque.

12. Support de données portable pour l'activation d'un accès à un système informatique ou à un programme pour un utilisateur par l'intermédiaire d'un terminal (2) sans un logiciel installé spécialement dans ce but sur le terminal (2), avec une puce de sécurité (6) pour la mise à disposition d'un code d'accès pour l'activation de l'accès au système informatique ou au programme, un appareillage (3) destiné à la formation d'une connexion de données avec le terminal (2) étant prévu et une authentification de l'utilisateur étant réalisable avec la puce de sécurité (6), **caractérisé en ce qu'**une unité d'entrée du terminal (2) est simulée par le support de données portable (1) et **en ce que** le code d'accès est transmis par le support de données portable (1) par l'intermédiaire de la connexion de données en tant qu'une entrée de l'unité d'entrée simulée.

13. Support de données portable selon la revendication 12, **caractérisé en ce qu'**il est connectable à une interface USB (7) du terminal (2).

14. Support de données portable selon une des revendications 12 ou 13, **caractérisé en ce qu'**il comporte un Hub USB (8) par lequel la connexion de données avec le terminal (2) est séparée en plusieurs trajets de signal distincts à l'intérieur du support de données portable (1).

15. Support de données portable selon une des revendications de 12 à 14, **caractérisé en ce qu'**il comporte une mémoire (4) réalisée sous forme de Flash-EEPROM.

16. Support de données portable selon une des revendications de 12 à 15, **caractérisé en ce qu'**il comporte un capteur (5) pour la saisie de données biométriques, notamment un capteur d'empreintes digitales.
